(19) Europäisches Patentamt
European Patent Office
Office européen des brevets

(11) **EP 1 760 810 A1**

(12) **EUROPEAN PATENT APPLICATION**
published in accordance with Art. 158(3) EPC

(43) Date of publication:
**07.03.2007 Bulletin 2007/10**

(51) Int Cl.:
*H01M 4/96* (2006.01)   *H01M 4/88* (2006.01)
*H01M 4/90* (2006.01)   *H01M 4/92* (2006.01)
*H01M 8/02* (2006.01)   *H01M 8/10* (2006.01)

(21) Application number: **05743740.2**

(22) Date of filing: **24.05.2005**

(86) International application number:
**PCT/JP2005/009396**

(87) International publication number:
**WO 2006/001147 (05.01.2006 Gazette 2006/01)**

(84) Designated Contracting States:
**DE FR GB**

(30) Priority: **23.06.2004 JP 2004184637**

(71) Applicant: **NISSAN MOTOR COMPANY, LIMITED**
**Yokohama-shi, Kanagawa 221-0023 (JP)**

(72) Inventor: **YAMAMOTO, Shinji**
**2380026 (JP)**

(74) Representative: **Schaeberle, Steffen**
**Hoefer & Partner,**
**Patentanwälte,**
**Gabriel-Max-Strasse 29**
**81545 München (DE)**

(54) **MEMBRANE-ELECTRODE ASSEMBLY FOR FUEL CELL**

(57)    It is an object of the present invention to provide an electrode for a fuel cell excellent in both durability and catalytic performance. The present invention has been made to solve the problem, which object can be attained by an electrode for a fuel cell, wherein a cathode is composed of a catalyst layer containing carbon powder supporting a catalyst and a polymer electrolyte, a polymer electrolyte membrane and a gas diffusion layer, and the amount of highly water-repellent carbon in said catalyst layer varies from the side contacting with the polymer electrolyte membrane toward the gas diffusion layer side.

## FIG. 2

EMBODIMENT CHANGING STEPWISE (2)

EMBODIMENT CHANGING CONTINUOUSLY AND LINEARLY

EMBODIMENT CHANGING STEPWISE (1)

AMOUNT OF HIGHLY WATER REPELLENT CARBON

THE SIDE CONTACTING WITH A POLYMER ELECTROLYTE MEMBRANE OR THE GAS ENTRANCE SIDE

A GAS DIFFUSION LAYER SIDE OR THE GAS EXIT SIDE

Printed by Jouve, 75001 PARIS (FR)

**Description**

Technical Field:

The present invention relates to a membrane-electrode assembly for a fuel cell, in particular relates to a membrane-electrode assembly for a fuel cell satisfying both durability and catalytic performance at an oxygen reduction electrode. A membrane-electrode assembly, an oxygen reduction electrode and a gas diffusion layer are abbreviated also as MEA, cathode and GDL, respectively.

Background Art:

Recently, in response to social needs or movement with the background of energy and environmental issues, utilization of a proton-exchange membrane fuel cell, which is operable and capable of providing high output density even at normal temperature, has been challenged as an automotive power source or a stationary power source. In application of such a fuel cell as an automotive power source or a stationary power source, maintaining desired power generation performance over a long period are required as well as cost reduction. Lifetime of a cell is said to be 5000 hours for an automotive power source, and 40,000 hours for a stationary (domestic use) power source. Therefore, a catalyst used for a fuel cell electrode is required to maintain desired catalytic activity from the initial stage of power generation to a long period of service, for which various researches and developments have been progressed.

A conventional catalyst was using an electrode catalyst, wherein catalyst particles of platinum or platinum alloy and the like were pulverized and supported on carbon powder (carrier) having a large surface area of about 250 to 1600 $m^2/g$ of carbon black and the like, for both an anode and a cathode.

However, carbon powder (carrier) may sometimes corrode and disappear by various causes. One of such causes includes large activation energy of an electrode reaction at a cathode, generating large oxygen reduction overvoltage there, resulting in subjecting the cathode to noble potential environment (about 0.8 V).

Corrosion and disappearance of carbon powder (carrier) bring about isolation/aggregation of catalyst particles of platinum and the like, which were supported, and decreases an effective electrode surface area, and lowers a cell performance, and they were the major causes of decrease in fuel cell efficiency. Therefore, an electrode catalyst using conventional carbon powder such as carbon black had a problem of poor durability due to gradual decrease in catalytic activity in long period of use, although excellent in high activity and catalytic performance.

In this circumstance, JP-A-2002-273224 has disclosed use of a platinum alloy supported catalyst, formed by supporting platinum and base metal on a carrier formed by mixing 2 or more kinds of carbon powders heat-treated at different heat treatment temperature, as an electrode catalyst.

In addition, JP-A-2003-109604 has disclosed a gas diffusion electrode for a fuel cell composed of a catalyst layer containing carbon powder supporting an electrode catalyst and a polymer electrolyte, a porous substrate made of carbon material and supporting the catalyst layer, and a water repellent material furnished to the porous substrate, characterized in that the amount of the water repellent material in the porous substrate continuously varies from the side contacting with the catalyst layer toward the other side.

Further, JP-A-7-220734 and JP-A-7-078617 have disclosed a gas diffusion electrode arranged with hydrophilic carbon (furnace black, Vulcan), hydrophobic carbon (acetylene black, Denka Black), and a water repellent material on a gas diffusion layer, to enhance drainage property of a membrane-electrode assembly.

Disclosure of the Invention:

In the invention described in the JP-A-2002-273224, corrosion resistance is increased by heat treatment at high temperature (graphitization treatment) of conventional carbon powder as a carrier. However, because graphitized carbon has very small specific surface area, and cannot support a catalytic component such as platinum or base metal in highly dispersed state, therefore cell performance (initial stage performance and steady state performance) becomes poor. Namely, although such carbon has improved durability, sufficient catalytic activity cannot be obtained, in particular, at the initial stage of power generation start-up, and also in a long period of use, catalytic activity is not necessarily sufficient and catalytic performance could be inferior. Therefore, in an electrode catalyst described in the JP-A-2002-273224, wherein only graphitized carbon obtained by heat treatment of carrier carbon powder at high temperature is utilized, it is difficult to satisfy both cell performance (steady state performance) and durability.

In addition, in an invention described in the JP-A-2003-109604, content of a water repellent material is made continuously varied from a polymer electrolyte membrane side toward a separator side, by means of varying permeation amount of a dispersion solution or a solution (water repellent solution) of a fluorocarbon resin (such as PTFE) or a silicone resin, which is a water repellent polymer into an electrode. The water repellent material (water repellent polymer) effectively contributes to improve water repellency in a porous substrate. However, because the water repellent material cannot be utilized as a catalyst supporting carrier, increase in the water repellent material in a catalyst layer relatively decreases catalyst amount and it is difficult to satisfy both power generation performance and durability.

Furthermore, an electrode catalyst described in the JP-A-7-220734 and JP-A-7-078617 has small improvement effect of durability of a catalyst layer, although drainage property is improved by water-repellent carbon in a gas diffusion layer.

Thus, it is an object of the present invention to provide a membrane-electrode assembly for a fuel cell excellent in both durability and catalytic performance.

The present inventor has intensively studied, in view of the problems, and has found that the problems can be solved by a membrane-electrode assembly for a fuel cell comprising: a catalyst layer containing carbon powder supporting a catalyst and a polymer electrolyte; a polymer electrolyte membrane; and a gas diffusion layer, wherein the amount of highly water-repellent carbon in the catalyst layer of at least a cathode side varies from the side contacting with the polymer electrolyte membrane toward the gas diffusion layer side.

Further other objects, features and characteristics of the present invention will be clear by referring to explanation below and preferable Embodiments exemplified in the accompanying drawings.

Brief Description of Drawings:

Fig. 1 is an outline perspective view shown by each decomposed fundamental structure of a fuel cell containing a membrane-electrode assembly for a fuel cell of the present invention.

Fig. 2 is a graph showing an Embodiment example, wherein the amount of highly water-repellent carbon in the catalyst layer of the present invention "varies from the side contacting with the polymer electrolyte membrane toward the gas diffusion layer side" or "varies from a gas entrance side toward a gas exit side".

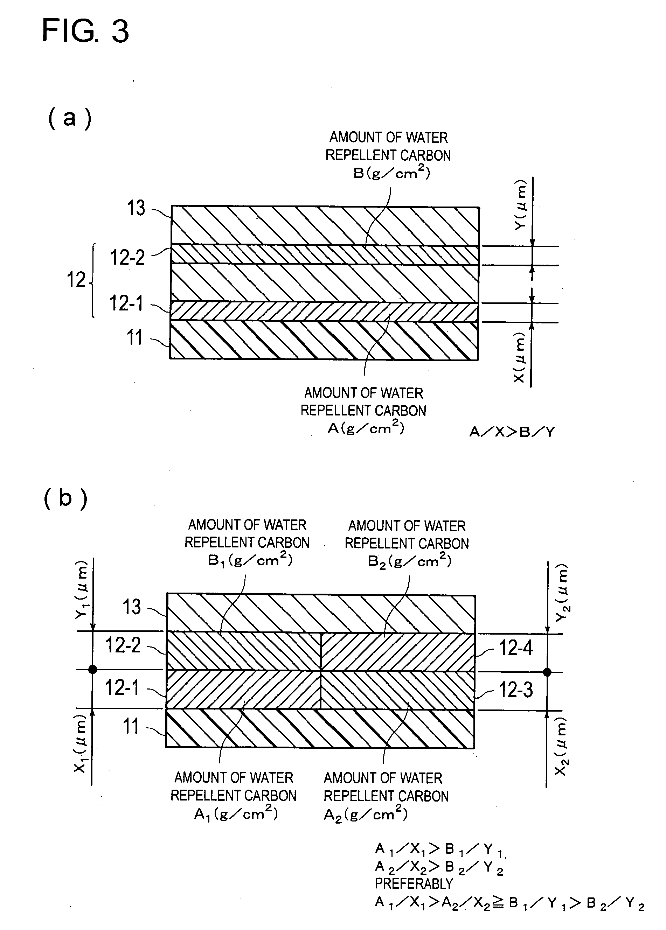

Fig. 3a is a cross-sectional view explaining that, when the catalyst layer of the side contacting with the polymer electrolyte membrane has thickness of X ($\mu$m) and contains A (g) per 1 cm$^2$ of highly water-repellent carbon; and the catalyst layer of the side contacting with the gas diffusion layer side has thickness of Y ($\mu$m) and contains B (g) per 1 cm$^2$ of highly water-repellent carbon, content ratio of highly water-repellent carbon in the catalyst layer satisfies (A/X) > (B/Y). Fig. 3b is a cross-sectional view explaining examples of Embodiments wherein the amount of highly water-repellent carbon in the catalyst layer of the present invention "varies from the side contacting with the polymer electrolyte membrane toward the gas diffusion layer side" and "varies from the gas entrance side toward the gas exit side".

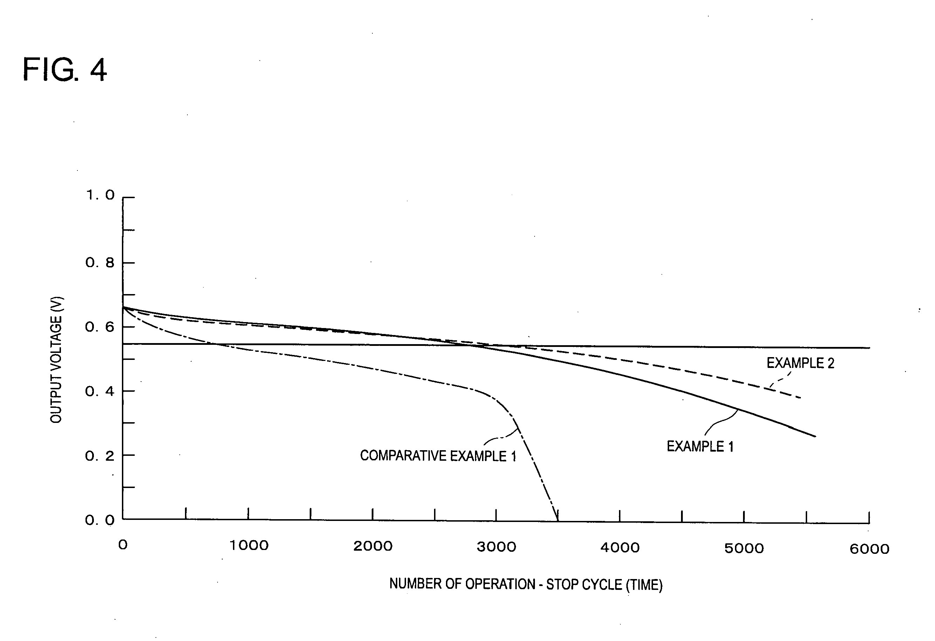

Fig. 4 is a graph showing variation of cell voltage with start-stop cycle times of each unit fuel cell containing an electrode catalyst prepared in Example.

Best Mode for Carrying Out the Invention:

Embodiments of the present invention are explained in detail below.

The present invention provides a membrane-electrode assembly for a fuel cell comprising a catalyst layer containing carbon powder supporting a catalyst and a polymer electrolyte; a polymer electrolyte membrane; and a gas diffusion layer, wherein the amount of highly water-repellent carbon in the catalyst layer varies from the side contacting with the polymer electrolyte membrane toward the gas diffusion layer side. In the present invention, by containing highly water-repellent carbon instead of the addition of a water repellent material (such as PTFE), and also by setting concentration gradient from the polymer electrolyte membrane side (higher water repellency) toward the gas diffusion layer side (lower water repellency) to quickly remove water generated by an oxygen reduction reaction at the cathode side, drainage property is enhanced. By this technique, carbon with high resistance against oxidative corrosion can effectively be used, and oxidative corrosion of conventional carbon powder (carrier) can significantly be suppressed.

A membrane-electrode assembly for a fuel cell of the present invention is composed of a catalyst layer containing carbon powder supporting a catalyst and a polymer electrolyte, a polymer electrolyte membrane and a gas diffusion layer.

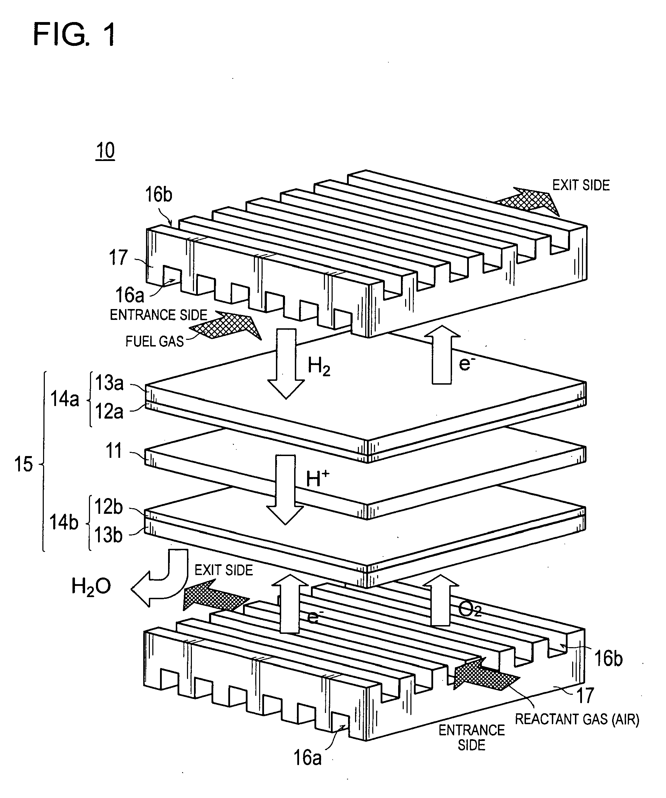

Fig. 1 shows fundamental structure of the fuel cell 10 containing the membrane-electrode assembly for a fuel cell. As shown in Fig. 1, the polymer electrolyte membrane 11 is sandwiched by the electrodes 14 composed of the catalyst layer 12 and the gas diffusion layer 13. An assembly of the polymer electrolyte membrane 11 and the electrodes 14 is called the MEA 15. The MEA 15 is sandwiched by the separators 17 having the channel 16 of fuel gas or reactant gas. In a fuel cell, the catalyst layer 12 side of the electrode 14 is contacted with the polymer electrolyte membrane 11, and the gas diffusion layer 13 side is contacted with the separator 17.

In the fundamental structure, fuel gas is supplied from the fuel gas channel 16a, which the surface of the separator 17 contacting with the anode side has, to the gas diffusion layer 13a and, by passing while diffusing through the gas diffusion layer 13a, reaches the catalyst layer 12a. In addition, oxidizing agent gas is supplied from the reactant gas channel 16b, which belongs to the surface of the separator 17 contacting with the cathode side, to the gas diffusion layer 13b and, by passing while diffusing through the gas diffusion layer 13b, reaches the catalyst layer 12b.

Then electrode reaction occurs at the surface of a catalyst contained in the catalyst layer 12. At the catalyst layer 12a of the anode side, a reaction of $H_2 \rightarrow 2H^+ + 2e^-$ occurs. At the catalyst layer 12b of the cathode side, a reaction of $2H^+ + 2e^- + 1/2O_2 \rightarrow H_2O$ occurs. As a reaction in total, $H_2 + 1/2O_2 \rightarrow H_2O + Q$ occurs. Electromotive force is obtained by this reaction, making power generation possible, however, water is generated at the same time at the catalyst layer 12b of the cathode side. In addition, in this reaction, $H^+$ generated at the catalyst layer 12a of the anode side moves inside the polymer electrolyte membrane 11 and reaches the catalyst layer 12b of the cathode side. In this case, one $H^+$ ion moves accompanying 5 to 20 $H_2O$ molecules.

The polymer electrolyte membrane 11 fulfills high hydrogen ion conductivity only in swelled state with sufficient amount of water. However, because a large quantity of water moves toward the cathode 14b accompanying with $H^+$ ion moving in the polymer electrolyte membrane 11, water is always required to be supplied to the polymer electrolyte membrane 11. This water is supplied as steam from the gas channel 16 to the gas diffusion layer 13, and by passing through the cathode 14b and the anode 14a, is supplied to the polymer electrolyte membrane 11. In addition, among water formed inside the catalyst layer 12b of the cathode 14b side, excess water not required by the polymer electrolyte membrane 11 is discharged outside from the gas channel 16b, after passing through from the catalyst layer 12b to the gas diffusion layer 13b.

As described above, in the catalyst layer 12b of the cathode 14b side, reactant gas ($O_2$ or air) diffuses inside porous electrode structure formed by carbon powder supporting a catalyst and a polymer electrolyte, and oxidizes a proton ($H^+$) moved from the anode 14a side via the polymer electrolyte membrane 11 to form reaction water (generated water). Diffusion of reactant gas is interrupted and power generation performance cannot be continued and maintained unless this water is quickly removed.

A porous substrate (supporting body) such as carbon paper or carbon cloth of the gas diffusion layer 13 has far higher water-repellent action than the catalyst layer 12, because it is porous and has large pore diameter, and also, a carbon layer coated and formed, if required, on the porous substrate has large particle diameter and high void rate inside the layer, or comprises a water repellent material. On the other hand, at the vicinity of the polymer electrolyte membrane 11, wettability is extremely high because the membrane itself retains and contains water.

Therefore, to promote removal of generated water, (continuous) variation of water repellency of the catalyst layer 12 from the polymer electrolyte membrane 11 side (higher water repellency) toward the gas diffusion layer 13 side (lower water repellency) is effective. Namely, because there are frequent comings and goings of water at the catalyst layer 12b of the cathode 14b side, suppression of water repellency inside the catalyst layer 12b is important. In particular, in view of flooding prevention and durability enhancement, water repellency in the catalyst layer 12b should be designed so that excess water is rapidly discharged outside through the gas diffusion layer 13b.

Therefore, in the present invention, from the viewpoint of rapid removal of the generated water, it has been found that it is effective to vary (decrease) the amount of highly water-repellent carbon so as to enhance drainage property from the side contacting with the polymer electrolyte membrane toward the gas diffusion layer side in the catalyst layer wherein water comings and goings frequently occurs. Namely, in the present invention, it is characterized in that the amount of highly water-repellent carbon in the catalyst layer 12b varies from the side contacting with the polymer electrolyte membrane 11 toward the gas diffusion layer 13b side. Namely, to rapidly remove the generated water by an electrode reaction (oxygen reduction reaction) at the cathode 14b side, highly water-repellent carbon is allowed to contain instead of the addition of a water repellent material, and by having gradient in distribution of highly water-repellent carbon from the side contacting with the polymer electrolyte membrane 11 to the side of the gas diffusion layer (porous substrate) 13b, enhancement of drainage property is designed to be possible.

In a conventional catalyst layer, because the surface of carbon powder used as a catalyst supporting carrier deteriorates and gradually takes hydrophilicity over a long period of use, a water repellent material such as PTFE is added to rapidly remove excess water among generated water in a reaction. On the other hand, because the addition of a water repellent material such as PTFE may increase thickness of a catalyst layer resulting in interruption of removal of generated water by contraries, or lower electric conductivity of an electrode layer, a method for the addition thereof is difficult and also there is a problem of big influence of the addition amount. Therefore, to maintain water repellency of carbon powder (carrier) over a long period without using a water repellent material such as PTFE has been required.

Carbon powder used as a carrier for supporting a catalyst is originally heat-treated at temperature required for carbonization, specifically at not lower than 1000°C and below 2000°C. Therefore, (carbonized) carbon powder used as a carrier for supporting a catalyst has extremely less functional groups or acid points at the surface, and hydrophobicity of surface is high compared with oxides and the like. However, as described above, it takes hydrophilicity during use, namely becomes highly hydrophilic carbon. Even in such a carbon powder, in carbon further heat-treated at high temperature (2000°C to 3000°C) necessary for graphitization, functional groups on the surface has further decreased, hydrophobicity becomes high and shows chemically stable (inert) state even after a long period of use, namely becomes highly water-repellent carbon.

Carbon powder used as a carrier for supporting a catalyst has improved corrosion resistance by graphitization treatment. On the other hand, graphitized carbon has extremely reduced specific surface area by heat treatment at high temperature, and moreover, has lost surface functional groups, therefore it is difficult to support catalyst particles in suitable state, and catalyst particles are in very easily aggregated state. Therefore, an electrode catalyst using such graphitized carbon as a carrier cannot provide sufficient catalytic activity, in particular at the initial stage of power generation, although excellent in durability, and also does not necessarily show sufficient catalytic activity and had a problem of poor catalytic performance.

In addition, a catalytic performance has close relation to dispersibility of catalyst particles. For example, larger BET surface area of carrier carbon provides higher dispersibility of catalyst particles and higher catalytic performance, while smaller BET surface area of carrier carbon provides lower catalytic performance due to aggregation of catalyst particles.

In addition, graphitized carbon has improved corrosion resistance due to having a graphitized layer formed at the surface. Corrosion resistance of carbon is influenced not only by graphitization degree of a graphitized layer but also largely by thickness of a graphitized layer, and a thicker graphitized layer provides higher corrosion resistance. Thickness of a graphitized layer is inversely proportional to BET surface area, and larger BET surface area provides a thinner graphitized layer, whereas smaller BET surface area provides a thicker graphitized layer. In addition, thickness of a graphitized layer is difficult to control by heat treatment condition and depends on carbon type used as raw material.

As described above, corrosion resistance of conductive carbon and catalytic performance of a catalyst are in trade-off relation. In the present invention, by taking notice of such characteristics of carbon, various studies on a membrane-electrode assembly for a fuel cell excellent in both durability and catalytic performance has been done, and it has been found that graphitized carbon has high water repellency and also is capable of maintaining water repellency even after a long period of use, and by newly combined use of highly water repellent (graphitized) carbon in addition to carbon powder (carrier carbon), removal of generated water inside the catalyst layer can be promoted and also corrosion of carrier carbon can be suppressed. In addition, by furnishing concentration gradient to highly water-repellent carbon, kind of, a drainage channel from the polymer electrolyte membrane 11 side toward the gas diffusion layer 13b side is designed inside the catalyst layer 12b. By this technique, carbon with high resistance to oxidative corrosion can effectively be used, and oxidative corrosion of conventional carrier carbon can significantly be suppressed. Accordingly, a fuel cell excellent in discharging performance, durability and reliability can be provided without water clogging.

As described above, by furnishing high water repellency to the catalyst layer 12 which generates water, excess water quickly moves to the gas diffusion layer 13 (or the polymer electrolyte membrane 11) having lower water repellency, and moves to the gas channel 16 by rapidly passing through inside the gas diffusion layer 13. In this means, excess water is rapidly discharged outside by control of water repellency, and occurrence of flooding by clogging of water in the electrode 14 can be suppressed. In addition, a fuel cell with high discharging characteristics and reliability without lowering gas permeability can be obtained.

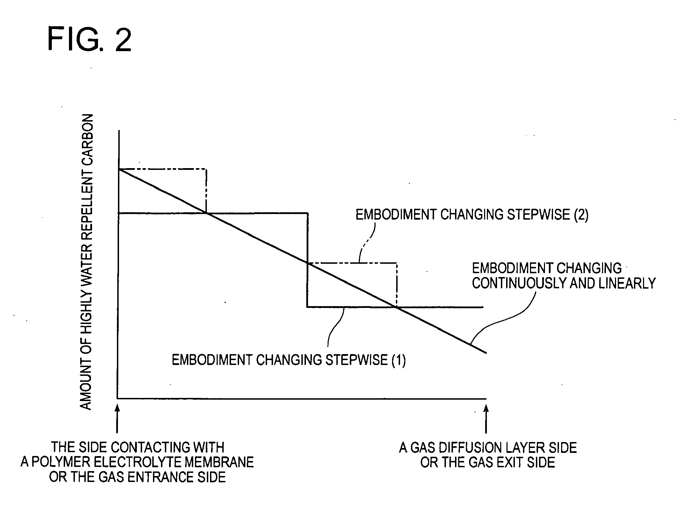

Here, the amount of highly water-repellent carbon in the catalyst layer 12 "varies from the side contacting with the polymer electrolyte membrane 11 toward the gas diffusion layer 13 side" may be any one as long as it is not "constant one without change" from the side contacting with the polymer electrolyte membrane 11 toward the gas diffusion layer 13 side. In the present invention, the amount of highly water-repellent carbon in the catalyst layer 12, as is shown in Fig. 2, may be varied step-by-step (stepwise) from the side contacting with the polymer electrolyte membrane 11 toward the gas diffusion layer 13 side, or may linearly and continuously be varied (gradually decreased), or may be varied sporadically. To vary the amount (concentration gradient) of highly water-repellent carbon, free adjustment is possible from stepwise variation to linear (continuous) variation, by making a catalyst layer multilayer structure and gradually decreasing (or increasing) the amount (concentration) of highly water-repellent carbon layer-by-layer. Namely, by forming the catalyst layer 12 by lamination of 2 or more layers composed of each layer having the different amount of highly water-repellent carbon, the amount of highly water-repellent carbon can freely be varied from the side contacting with the polymer electrolyte membrane 11 toward the gas diffusion layer 13 side. By such designing, removal of generated water in the catalyst layer 12 can be promoted, and also corrosion resistance of carbon can be enhanced. In this connection, in Examples described later, Embodiments of step-by-step (stepwise) variation is shown by lamination in 2 layers of a catalyst layer having the different amount (concentration) of highly water-repellent carbon, however, the present invention is by no means limited thereto.

In addition, the amount of total carbon powder (highly water-repellent carbon and other highly hydrophilic carbon as carrier carbon) in the catalyst layer 12 may be about constant from the side contacting with the polymer electrolyte membrane 11 toward the gas diffusion layer 13 side, and formulation ratio of highly water-repellent carbon and highly hydrophilic carbon composing carbon powder may be varied. Namely, with varying (decreasing) the content of highly water-repellent carbon, the content of highly hydrophilic carbon may be varied (increased). Alternatively, the amount of total carbon powder in the catalyst layer 12 may be varied. For example, the content of highly hydrophilic carbon may be set nearly constant from the side contacting with the polymer electrolyte membrane 11 toward the gas diffusion layer 13 side, and only the content of highly water-repellent carbon may be varied (decreased) from the side contacting with the polymer electrolyte membrane 11 toward the gas diffusion layer 13 side, so that the amount (concentration) of total carbon powder in the catalyst layer 12 is varied in proportion to the amount (concentration) of highly water-repellent carbon. Furthermore, in the present invention, the content of highly water-repellent carbon may be set nearly constant from the side contacting with the polymer electrolyte membrane 11 toward the gas diffusion layer 13 side, and only the content of highly hydrophilic carbon may be varied (increased) from the side contacting with the polymer electrolyte membrane 11 toward the gas diffusion layer 13 side, so that the amount (concentration) of total carbon powder in the catalyst layer 12 is varied in proportion to the content of highly hydrophilic carbon. Namely, even if the absolute amount of highly water-repellent carbon may be constant from the side contacting with the polymer electrolyte membrane 11 toward the gas diffusion layer 13 side, relative amount (concentration) of highly water-repellent carbon based on total amount of carbon powder is allowed to be varied.

In the present invention, the amount of highly water-repellent carbon in the catalyst layer 12 is preferably decreased from the side contacting with the polymer electrolyte membrane 11 toward the gas diffusion layer 13 side. Namely, concentration gradient is preferably set so that water repellency is high at the polymer electrolyte membrane 11 side, and low at the gas diffusion layer 13 side. Mathematization of this setting is as follows. Namely, to set concentration gradient of highly water-repellent carbon in the catalyst layer 12 in the present invention, in the catalyst layer 12 with 2 or more laminated layers, as shown in Figs 3 (a) and 3 (b), when the catalyst layer 12-1 of the side contacting with the polymer electrolyte membrane 11 has thickness of X ($\mu$m) and contains A (g) per 1 cm$^2$ of the highly water-repellent carbon (for example, graphitized carbon) ; and the catalyst layer 12-2 of the side contacting with the gas diffusion layer 13 has thickness of Y ($\mu$m) and contains B (g) per 1 cm$^2$ of the highly water-repellent carbon (for example, graphitized carbon), content ratio of the highly water-repellent carbon in the catalyst layer 12 desirably satisfies the following equation (1):

$$[\text{Equation 1}]$$

$$(A/X) > (B/Y) \qquad (1)$$

Meanwhile, in the case of the catalyst layer 12 having multilayer structure of 3 or more layers, satisfaction of the equation (1) by only relation between most outside layers 12-1 and 12-2 composing the catalyst layer 12 may be enough. Satisfaction of the equation (1) by any of 2 adjacent layers composing the catalyst layer 12 is more preferable. Because satisfaction of the equation (1) by the catalyst layer 12 having 2 or more laminated layers decreases water repellency (namely, the amount of highly water-repellent carbon) along the discharging direction of excess water, move direction of water is more surly controlled, removal of generated water in the catalyst layer 12 from the side contacting with the polymer electrolyte membrane 11 toward the gas diffusion layer 13 side can be promoted, water clogging in the catalyst layer 12 can be suppressed, and further oxidative corrosion of highly hydrophilic carbon (carbonized conventional carbon) and highly water-repellent carbon (graphitized carbon) used as carbon powder can be suppressed, yielding large effect to far more improve durability of a carbon carrier.

In addition, the "A" is 0.01 to 1.0 mg/cm$^2$, and preferably 0.05 to 0.5 mg/cm$^2$, the "B" is 0.01 to 1.0 mg/cm$^2$, and preferably 0.05 to 0.5 mg/cm$^2$, the "X" is 1 to 20 $\mu$m, and preferably 2 to 15 $\mu$m and the "Y" is 1 to 20 $\mu$m, and preferably 2 to 15 $\mu$m, however, they are not especially limited to the range specified here.

In addition, also in the case when variation is present in 2 or more partitions from the gas entrance side toward the gas exit side, satisfaction of the equation (1) is similarly desirable. For example, as shown in Fig. 3(b), when in the catalyst layer 12 is partitioned in four, that is from 12-1 to 12-4, relations of $(A_1 X_1) > (B_1/Y_1)$ and $(A_2/X_2) > (B_2/Y_2)$ are satisfied. Preferably $(A_1/X_1) > (B_1/Y_1)$ and $(A_2/X_2) > (B_2/Y_2)$ and further $(A_1/X_1) > (B_2/Y_2)$ and $(A_2/X_2) > (B_1/Y_1)$ are satisfied, and more preferably $(A_1/X_1) > (A_2/X_2) > (B_1/Y_1) > (B_2/Y_2)$ is satisfied. These relations are similarly held when inside the catalyst layer 12 is further finely partitioned.

In the present invention, it has been found that graphitized carbon has high water repellency and is capable of maintaining water repellency also after a long period of use, and also found that combined use with conventional carbonized carrier carbon promotes removal of generated water inside the electrode catalyst layer, and also an membrane-electrode assembly for a fuel cell which can improve corrosion resistance of carbon can be obtained.

Namely, in the present invention, 2 or more kinds are contained as carbon powder in the catalyst layer, and they are largely classified into 2 groups; one group thereof being highly water-repellent carbon and the other group being highly hydrophilic carbon, namely conventional carbonized carbon and highly conductive carrier carbon suitable to support a catalyst, as described above.

Among these, as highly water-repellent carbon, graphitized carbon is included. Specifically, one obtained by subjecting conventional carbonized carbon heat treated at not lower than 1000°C and lower than 2000°C (conductive carbon black) to graphitization treatment by heat treatment at further high temperature (graphitized carbon black; having higher conductivity than conventional carbon black), and the like are included. Graphitized carbon has high hydrophobicity because of extremely less surface functional groups, and also pores thereof are lost by high temperature treatment, resulting in small surface area and small water retention property. Therefore, water repellency of carbon can be maintained over a long period without increasing thickness of the catalyst layer or lowering electric conductivity.

Here, graphitization treatment temperature is not especially limited as long as it is capable of forming a desired graphitized layer at the surface of carbon. Such graphitization treatment temperature, although suitable temperature condition is a little different by carbon type, and the like, is usually not lower than 2000°C, preferably in a range of 2000 to 3000°C, and more preferably 2400 to 2800°C. Below 2000°C is not sufficient for forming a graphitized layer at the surface of carbon, and could not provide desired water repellency and sufficient corrosion resistance. Graphitization treatment time is also not especially limited as long as it is capable of forming a desired graphitized layer at the surface of carbon. The graphitization treatment is preferably carried out under inert gas atmosphere such as nitrogen, argon and helium.

As the highly water-repellent carbon, for example, as used in Examples, graphitized carbon such as graphitized acetylene black (GrAB), graphitized furnace black (GrFB), graphitized Vulcan™ (GrVul) and graphitized Ketjenblack™ (GrKB) are included, however, not limited thereto. The highly water-repellent carbon may be used alone or as in a mixed form of two or more kinds.

The highly water-repellent carbon is preferably graphitized carbon having a BET surface area of smaller than 150 $m^2$/g, more preferably 50 to 140 $m^2$/g, and particularly preferably 80 to 130 $m^2$/g. In addition, when two or more kinds of carbons are used in a mixed form, BET surface area of each carbon should satisfy the range specified above. BET surface area of graphitized carbon smaller than 150 $m^2$/g provides extremely less surface functional groups, resulting in high hydrophobicity, small surface area and small water retention property. Therefore, water repellency of carbon can be maintained over a long period without increasing thickness of the catalyst layer or lowering electric conductivity.

In addition, the highly water-repellent carbon has a lattice constant $C_0$ value (Å) in X-ray diffraction of not larger than 7.0 Å preferably 6.7 to 7.0 Å, and more preferably 6.8 to 6.9 Å. In ideal graphite, $C_0$=6.707 Å, and for example, in the case of graphitized carbon prepared under graphitization treatment conditions (temperature and time) of Examples, each $C_0$ value is in GrAB=6.853 Å, in GrFB=6.852 Å, in GrVul=6.851 Å, and in GrKB=6.879 Å. Lattice constant $C_0$ value in the X-ray diffraction may be determined, for example, by Gakushin method (Michio Inagaki, "Carbon" No. 36, 25-34 (1963)) using an X-ray diffraction method (XRD), or by lattice spacing ($d_{002}$) (it represents plane spacing of a hexagonal net plane based on graphite structure of conductive carbon) determined by the same method. Namely, lattice spacing ($d_{002}$) of carbon represents is plane spacing of a hexagonal net plane based on graphite structure of carbon and represents an average value of half inter-layer distance of lattice constant $C_0$ in the c axis direction, which is a perpendicular direction of the hexagonal net plane.

In carbon graphitized by heat treatment and the like, a graphitized layer composed of 3D crystal lattice similar to graphite structure is formed at the surface, and fine inter-crystal lattice space moiety decreases with progress of graphitization, and thus crystal structure of carbon material approaches to crystal structure of graphite. In consideration of corrosion resistance and the like, crystallinity of graphitized carbon is preferably as high as possible. Therefore, in many cases when a true density of the graphitized carbon is below 1.80 g/$cm^3$ and a lattice spacing, $d_{002}$, is over 3. 50 Å, graphite structure may not sufficiently be developed, and high corrosion resistance and electron conductivity could not be obtained. In addition, in many cases when a true density is over 2.11 g/$cm^3$ and a lattice spacing, $d_{002}$, is below 3.36 Å, graphite structure may excessively be developed, and sufficient specific surface area could not be obtained.

Therefore, as the graphitized carbon black, one having a true density of 1.80 to 2.11 g/$cm^3$, and a lattice spacing, $d_{002}$, of 3.36 to 3.55 Å is preferably used, and more preferably one with a true density of 1.90 to 2.11 g/$cm^2$, and a lattice spacing, $d_{002}$, of 3.40 to 3.49 Å, and particularly preferably one with a true density of 2.0 to 2.11 g/$cm^2$, and a lattice spacing, $d_{002}$, of 3.42 to 3.49 Å is preferably used.

In this connection, in the present invention, true density is a value measured by a vapor phase replacement method using helium, and lattice spacing, $d_{002}$, is a value measured by Gakushin method (Inagaki Michio, "Carbon" No. 36, 25-34 (1963)) using an X-ray diffraction method.

Next, as the highly hydrophilic carbon, any one having lower water repellency than the highly water-repellent carbon can be used, and those used as a conventional conductive carbon carrier which is not graphitized can be used. In other words, any one having higher hydrophilicity than the highly water-repellent carbon can be used. Specifically, carbonized carbon obtained by heat treatment at not lower than 1000°C and lower than 2000°C, and the like are included. In addition, depending on temperature for carbonization treatment, there may be the case that a graphitized layer is formed at a very small part of the resultant carbon surface, and, such one is also included as the highly hydrophilic carbon.

In this connection, the temperature for carbonization treatment is usually not lower than 1000°C and lower than 2000°C. The temperature below 1000°C does not provide sufficient carbonization, while the temperature over 2000°C can not secure sufficient surface area important in using as a carrier, although water repellency is enhanced.

As the highly hydrophilic carbon, such carbon that has a BET surface area of not lower than 150 $m^2$/g, preferably

250 to 2000 m$^2$/g, and more preferably 300 to 1300 m$^2$/g (not graphitized one) is desirable. In addition, when 2 or more kinds of carbons are used in a mixed form, BET surface area of each carbon should satisfy the range specified above. BET surface area of carbon below 150 m$^2$/g makes difficult to control dispersibility and particle diameter of catalyst (Pt, and the like) particles, and to secure high power generation performance.

As the highly hydrophilic carbon, any carbon usually used as a highly conductive carrier is preferably used, in view of control of dispersibility and particle diameter of catalyst particles such as Pt, and securing high power generation performance, for example, as used in Examples, Vulcan™, Ketjenblack™, Black Pearls™, acetylene black, and furnace black are included. These highly hydrophilic carbons may be used alone or as in a mixed form of two or more kinds.

The highly water-repellent carbon and the highly hydrophilic carbon can be differentiated (identified) by thermal history (heat treatment temperature) in production, BET surface area of carbon, microscopic observation (lattice constant C$_0$ value in X-ray diffraction) of carbon, and the like. In addition, as for a carbon elementary substance, carbon kind or degree of graphitization can be estimated, to some extent, by BET surface area or C$_0$ value. In addition, in a product form, whether graphitized carbon is present or not in a catalyst layer, or content ratio can be estimated by measurement of presence or absence of peaks of crystalline carbon (graphite) and amorphous carbon (carbon other than graphite), and intensity ratio thereof, using Raman spectroscopy. In highly hydrophilic carbon, a peak attributed to crystalline carbon is little observed, while in highly water-repellent carbon, both of a peak attributed to crystalline carbon and a peak attributed to amorphous carbon are observed, and the peak ratio varies depending on degree of graphitization (peak intensity of crystalline carbon increases). In addition, similar estimation is possible by partitioning a product in the thickness direction or in the channel direction in several and by sampling a peeled catalyst layer to be subj ected to measurement using Raman spectroscopy, and the like.

In the present invention, variation of the amount of the highly water-repellent carbon in the catalyst layer continuously from the side contacting with the polymer electrolyte membrane toward the gas diffusion layer side, and preferably, continuous decrease is desirable. It is for this reason that continuous variation fromthe side contacting with the polymer electrolyte membrane toward the gas diffusion layer side is optimal to prevent flooding. Namely, in a catalyst layer, reactant gas (O$_2$ or air) diffuses inside porous electrode structure formed by a catalyst and a polymer electrolyte (ionomer), and an oxygen reduction reaction (a reaction at a cathode side; 4H$^+$+O$_2$+4e$^-$→2H$_2$O) occurs with protons moved from an anode side through a polymer electrolyte membrane to generate reaction water (generated water). Diffusion of reactant gas is interrupted and power generation performance cannot be continued and maintained unless this water is quickly removed. In a porous substrate (support) such as carbon paper or carbon cloth of a gas diffusion layer, since it is porous and has large pore diameter, and also, a carbon layer coated on the supporting body has large particle diameter and high pore rate inside a layer, or since a water repellent material is added, water repellent action is far higher than in the electrode catalyst layer. On the other hand, at the vicinity of the polymer electrolyte membrane, wettability is extremely high because membrane itself retains and contains water. Therefore, to promote removal of generatedwater, continuous variation of water repellency of the catalyst layer from the polymer electrolyte membrane side (higher water repellency) toward the gas diffusion layer side (lower water repellency) is effective. For this purpose, continuous variation (decreases) of the amount of highly water repellent conductive carbon (graphitized carbon) from the side contacting with the polymer electrolyte membrane toward the gas diffusion layer side (of the porous substrate) is effective.

In addition, the present invention is characterized in that the amount of the highly water-repellent carbon in the catalyst layer varies (decreases), preferably continuously varies (decreases) from the gas entrance side toward the gas exit side. It is for this reason that variation (decreasing) from the gas entrance side toward the gas exit side is optimal to improve start-up property below freezing point. Start-up below freezing point has a problem that generated water accumulated between the electrode catalyst layer and the gas diffusion layer freezes below freezing point, at the downstream part in the gas flow direction, thus interrupting gas diffusion. Therefore, water repellency at the downstream part in the gas flow direction in the electrode gas diffusion layer is desirably highest. Consequently, in view of the rapid removal of the generated water, (continuous) variation of the amount of highly water-repellent conductive carbon (graphitized carbon) from the gas entrance side toward the gas exit side is effective.

Here, the amount of the highly water-repellent carbon in the catalyst layer 12 "varies from the gas entrance side toward the gas exit side" may be any one as long as it is not "constant without change" from the gas entrance side toward the gas exit side. In the present invention, the amount of the highly water-repellent carbon in the catalyst layer 12 may be varied step-by-step (stepwise) from the gas entrance side toward the gas exit side, or may linearly and continuously varied (gradually decreased), or may be varied sporadically. To vary the amount (concentration gradient) of highly water-repellent carbon from the gas entrance side toward the gas exit side, free adjustment is possible from stepwise variation to linear (continuous) variation, by making such structure as having a plurality of regions (partitions) with different amount (concentration gradient) of highly water-repellent carbon from the gas entrance side of the catalyst layer toward the gas exit side, and gradually decreasing (or increasing) the amount (concentration) of highly water-repellent carbon by each region (partition). Namely, by forming the catalyst layer 12 by separately coating each region (partition) using catalyst slurry (raw material for formation of the catalyst layer) having the different amount of highly water-repellent carbon, the amount of highly water-repellent carbon can freely be varied from the gas entrance side toward the gas exit side. By such designing, removal of generated water in the catalyst layer 12 can further be promoted, and start-up property below freezing point can be improved. In this connection, in Examples 11 and 12 described later, Examples of step-by-step (stepwise) variation is shown by separately coating 2 regions (partitions) of the gas entrance side (upstream side) and the gas exit side (downstream side), using catalyst slurry having the different amount (concentration) of highly water-repellent carbon, however, the present invention is by no means limited thereto.

In addition, the amount of total carbon powder in the catalyst layer 12 may be nearly constant from the gas entrance side toward the gas exit side, and formulation ratio of highly water-repellent carbon and highly hydrophilic carbon composing carbon powder may be varied. Namely, with varying (decreasing) the content of highly water-repellent carbon, the content of highly hydrophilic carbon may be varied (increased). Alternatively, the amount of total carbon powder in the catalyst layer 12 may be varied. For example, the content of highly hydrophilic carbon may be set nearly constant from the gas entrance side toward the gas exit side, and only the content of highly water-repellent carbon may be varied (decreased), so that the amount (concentration) of total carbon powder in the catalyst layer 12 is varied in proportion to the amount (concentration) of highly water-repellent carbon. Furthermore, in the present invention, the content of highly water-repellent carbon may be set nearly constant from the gas entrance side toward the gas exit side, and only the content of highly hydrophilic carbon may be varied (increased) from the gas entrance side toward the gas exit side, so that the amount (concentration) of total carbon powder in the catalyst layer 12 is varied in proportion to the content of highly hydrophilic carbon. Namely, even when the absolute amount of highly water-repellent carbon may be constant from the gas entrance side toward the gas exit side, relative amount (concentration) of highly water-repellent carbon based on total amount of carbon powder may be varied.

"From the gas entrance side toward the gas exit side" is one specified only by the gas entrance and the gas exit, and not necessarily by gas passage therebetween. Since it is not necessarily specified along gas passage due to presence of various Embodiments of gas inside passage, and, depending on embodiment of gas inside passage, it may be designed so as to vary along gas passage.

In addition, the present invention is characterized in that the amount of the highly water-repellent carbon (graphitized carbon) in the catalyst layer varies (decreases), preferably continuously varies (decreases) from the side contacting with the polymer electrolyte membrane toward the gas diffusion layer (porous substrate) side, and also from the gas entrance side toward the gas exit side. It is for this reason that each action effect can effectively be fulfilled by this designing. Namely, to prevent flooding and improve start-up performance below freezing point, continuous variation from the side contacting with the polymer electrolyte membrane toward the gas diffusion layer (porous substrate) side, and further continuous variation from the gas entrance side toward the gas exit side are optimal. Start-up below freezing point has a problem that generated water accumulated between the catalyst layer and the gas diffusion layer freezes below freezing point, at the downstream part in the gas flow direction, thus interrupting gas diffusion. Therefore, water repellency at the downstream part in the gas flow direction in the catalyst layer is desirably highest. In view of the rapid removal of the generated water, continuous variation of the amount of the highly water-repellent carbon (graphitized carbon) from the side contacting with the polymer electrolyte membrane toward the gas diffusion layer (porous substrate) side, and also from the gas entrance side toward the gas exit side is considered effective.

The present invention, as described above, is one composed by using conventional carbon (the highly hydrophilic carbon described above) having high catalyst supporting ability and high electric conductivity as carbon powder supporting a catalyst, and further in addition to this, by using new highly water-repellent carbon. Therefore, highly water-repellent carbon is not necessarily required to support a catalyst, however, in view of increasing supporting amount of a catalyst, highly water-repellent carbon also desirably support a catalyst component (noble metal). As the catalyst component, noble metal having high corrosion resistance (oxidation resistance) and excellent power generation performance is desirable.

Therefore, in the present invention, highly water-repellent carbon in the catalyst layer desirably contain (support) at least one kind of a noble metal component selected from the group comprising of platinum, palladium, rhodium, ruthenium and iridium. It is for this reason that setting of mixing ratio between hydrophilic carbon supporting a catalyst component of noble metal, and water-repellent carbon supporting a catalyst component of noble metal in the optimal range is required to improve and satisfy both cell performance (power generation performance at the initial stage) and corrosion resistance.

In addition, in view of performance, average particle diameter of a catalyst supported on highly water-repellent carbon is desirably in a range of 1 to 10 nm, and preferably 2 to 6 nm. The average particle diameter below 1 nm provides inferior particle durability, while the average particle diameter over 10 nm provides poor contact state with an ionomer and low performance.

In addition, the present invention is characterized in that highly water-repellent carbon in the catalyst layer contains (supports) at least one kind of a noble metal catalyst component selected from the group comprising of platinum, palladium, rhodium, ruthenium and iridium, and further contains at least one kind of a base metal catalyst component selected from the group comprising of Co, Cr, Mn, Ni and Fe, wherein supporting amount of the noble metal / supporting amount of the base metal (molar ratio)=5/1 to 1/2, preferably 5/1 to 1/1. It is for this reason that supporting a catalyst component also by highly water-repellent carbon in the catalyst layer is important to improve and satisfy both cell performance (power generation performance at the initial stage) and corrosion resistance. The catalyst component is desirably a noble metal-based alloy having high corrosion resistance (acid resistance) and excellent power generation performance, and, further it is advantageous to contain a suitable amount of a base metal component, in which catalytic performance can further be improved. Namely, when noble metal and base metal are used in a mixed form, in view of performance, average particle diameter of a noble metal alloy supported on highly water-repellent carbon is desirably in a range of 1 to 10 nm, and preferably 2 to 6 nm. The average particle diameter of a noble metal alloy below 1 nm provides inferior particle durability, while the average particle diameter over 10 nm provides poor contact state with an ionomer and low performance. Here, when supporting amount of the noble metal/supporting amount of the base metal (molar ratio) > 5/1, the addition effect of base metal is not expressed, while when supporting amount of the noble metal / supporting amount of the base metal (molar ratio) < 1/2, activity of noble metal is inhibited by contraries.

In the present invention, kind and average particle diameter of highly hydrophilic carbon and catalyst particles supported thereon are not especially limited, and can be selected, as appropriate, from conventionally well-known ones.

In the present invention, to satisfy both durability of an electrode catalyst and catalyst performance, and to reduce decreasing degree of catalytic activity over time, catalyst particles supported on highly water-repellent carbon and highly hydrophilic carbon are preferably supported after subjecting to adjustment of each average particle diameter. In such view point, average particle diameter of catalyst particles on highly water-repellent carbon is 1 to 10 nm and preferably 2 to 6 nm. The average particle diameter below 1 nm could provide inferior durability after a long period of use, although provides high catalytic activity at the initial stage of power generation, while the average particle diameter over 10 nm provides small particle surface area of catalyst particles and poor contact state with an ionomer and could lower catalytic activity by contraries. On the other hand, average particle diameter of catalyst particles on highly hydrophilic carbon is 1 to 10 nm and preferably 2 to 6 nm. The average particle diameter below 1 nm could not sufficiently suppress lowering of catalytic activity over time, while the average particle diameter over 10 nm provides small particle surface area of catalyst particles and poor contact state with an ionomer and could lower catalytic activity by contraries.

Here, "average particle diameter of catalyst particles" represents average value of crystallite diameter determined by half bandwidth of a diffraction peak of catalyst particles in X-ray diffraction, or particle diameter of catalyst particles studied by image of a transmission electron microscope.

In addition, as for an electrode catalyst of the present invention, supporting amount of catalyst particles on the highly water-repellent carbon is 10 to 70% by mass, preferably 20 to 60% by mass, and more preferably 30 to 50% by mass based on total amount of catalyst particles used in the electrode catalyst, while supporting amount of catalyst particles on the highly hydrophilic carbon is 5 to 70% by mass, preferably 20 to 60% by mass, and more preferably 30 to 50% by mass.

To further improve durability of an electrode catalyst and catalyst performance, and to reduce decreasing degree of catalytic activity over time, supporting amount of catalyst particles supported on each of the highly water-repellent carbon and the highly hydrophilic carbon is preferably within the above range.

The supporting amount on the highly water-repellent carbon below 10% by mass could not provide high catalytic activity at the initial stage of power generation, while the supporting amount over 70% by mass could lower catalytic activity by contraries due to too many catalyst particles are supported, resulting in overlapping of catalyst particles themselves.

The supporting amount on the highly hydrophilic carbon over 70% by mass could lower catalytic activity by contraries due to too many catalyst particles are supported, resulting in over lapping of catalyst particles themselves, while supporting amount below 5% by mass could not sufficiently suppress decreasing degree of catalytic activity over time.

In the electrode catalyst layer of the present invention, to further improve durability of the electrode catalyst and catalyst performance, catalyst particles supported on the highly water-repellent carbon, and catalyst particles supported on the highly hydrophilic carbon are preferably mixed by specified ratio.

Namely, as for the electrode catalyst of the present invention, the electrode catalyst (C) composed of the catalyst particles supported on the highly water-repellent carbon, and the electrode catalyst (D) composed of the catalyst particles supported on the highly hydrophilic carbon is mixed by a mass ratio (D)/(C) of 4/1 to 1/2, preferably 3/1 to 1/2, and more preferably 2/1 to 1/1. As for this relation, irrespective of whether highly water-repellent carbon supports a catalyst or not, highly water-repellent carbon and highly hydrophilic carbon are desirably mixed in nearly the similar ration as aforementionedmass ratio (D) /(C), when viewed by the total catalyst layer. However, because the amount of highly water-repellent carbon and further the amount of highly hydrophilic carbon may vary in the catalyst layer as described above, region not necessarily within the range may naturally be present.

Mass ratio (D)/(C), in mixing the electrode catalyst (C) and the electrode catalyst (D), below 1/2 could lower catalytic performance, while the ratio over 4/1 could not provide sufficient durability, therefore, to be within the above range is preferable.

As the highly hydrophilic carbon used in the electrode catalyst of the present invention, one having an electric conductivity of 1 to 10 S/cm is preferably used. Highly hydrophilic carbon, since it is used in the electrode catalyst of a high performance fuel cell, is required not only to support catalyst particles but also have function as a current collector for taking out electrons to an external circuit or taking in electrons from an external circuit. Electric conductivity of the highly hydrophilic carbon below 1 S/cm could increase internal resistance of a fuel cell and could incur lowering of cell performance, while electric conductivity over 10 S/cm could lower catalytic activity. On the other hand, as highly water-repellent carbon, one having an electric conductivity of 10 to 1000 S/cm is preferably used. Electric conductivity of the highly water-repellent carbon below 10 S/cm could lower durability, while electric conductivity over 1000 S/cm could lower catalytic activity.

Then, as catalyst particles supported on highly hydrophilic carbon, any one is allowed as long as showing catalytic action for an oxidation reaction of hydrogen and/or a reduction reaction of oxygen. For example, at least one kind of noble metal selected from the group comprising of platinum, palladium, rhodium, ruthenium and iridium is included. In particular, platinum can be used alone as catalytic particles due to having high catalytic activity. However, to improve heat resistance, poisoning resistance against carbon monoxide and the like, platinum may be used as an alloy between at least one kind of base metal selected from the group comprising of chromium, manganese, iron, cobalt, nickel or iridium and noble metal such as platinum.

Also in catalyst particles supported on highly hydrophilic carbon, mixing ratio between noble metal and base metal in an alloy is preferably in mass ratio of platinum/base metal of 1/1 to 5/1, particularly 2/1 to 4/1. Use of this range can provide catalyst particles having poisoning resistance, corrosion resistance and the like while maintaining high catalytic activity.

As for a supporting method of catalyst particles on highly water-repellent carbon and highly hydrophilic carbon, any method conventionally used in general may be allowed, such as an impregnation method, a liquid phase reduction supporting method, an evaporation method to dryness, a colloid adsorption method, a spray pyrolysis method, and an inverted micelle (micro emulsion) method.

In addition in the catalyst layer, a polymer electrolyte such as an ion exchange resin is included other than the carbon powder (highly hydrophilic carbon) supporting the catalyst particles, and the highly water-repellent carbon supporting or not supporting the catalyst particles. An ion exchange resin preferably covers at least a part of the electrode catalyst, as a binder polymer. This cover can not only improve ion conductivity, but also can maintain electrode structure stable, and can enhance electrode performance.

An ion exchange resin is not especially limited and includes one made of a perfluorosulfonic acid polymer-based proton conductor such as a Nafion™ solution; a hydrocarbon-based polymer compound doped with an inorganic acid such as phosphoric acid; an organic/inorganic hybrid polymer substituted with a proton conductive functional group at a part thereof; a proton conductor composed of polymer matrix impregnated with a phosphoric acid solution or a sulfuric acid solution; and the like.

As a perfluorosulfonic acid polymer-based proton conductor, specifically, not only a polymer composed of only carbon atoms and fluorine atoms, but also one containing oxygen atoms and the like, when all of the hydrogen atoms are substituted with fluorine atoms, are include, such as a copolymer containing a polymer unit based on $CF_2=CF_2$ and a polymer unit based on $CF_2=CF-(OCF_2CFX)_m-O_P-(CF_2)_n-SO_3H$ (wherein X represents fluorine atom or trifluoromethyl group; m represents an integer of 0 to 3; n represents an integer of 1 to 12; and p represents 0 or 1).

In the catalyst layer, a water-repellent polymer such as polytetrafluoroethylene, polyhexafluoropropylene, and a tetrafluoroethylene-hexafluoropropylene copolymer may be included. By such inclusion, water repellency of the resultant catalyst layer can be enhanced and rapid discharge of water formed during power generation is possible.

Then, as a polymer electrolyte membrane, although not especially limited, a membrane composed of an ion exchange resin and the like are included. The ion exchange resin is similar as has already been explained in the second electrode catalyst layer of the present invention, therefore detailed explanation is omitted here. As the ion exchange resin, the same one or different one may be used in the electrode catalyst layer and the solid polymer electrolyte membrane. In consideration of ion conductivity, the same one is preferably used. As the polymer electrolyte membrane, commercially available products may be used, for example, a fluoropolymer-based polymer electrolyte, such as a perfluorosulfonic acid membrane as represented by various NAFION (trade mark of DuPont Co. Ltd.) or Flemion; an ion exchange resin manufactured by Dow Chem. Co. Ltd.; an ethylene-tetrafluoroethylene copolymer-based membrane; a trifluorostyrene polymer-based resin membrane; or a hydrocarbon resin-based membrane containing a sulfonic acid group.

The gas diffusion layer is not especially limited, and a porous substrate composed of sheet-like material having electric conductivity and pore property, such as carbon-based fabric, paper-like material obtained by paper making, felt, nonwoven fabric, as a substrate, are included. In addition, to prevent flooding phenomenon by enhancing water repellency even in the gas diffusion layer, similarly as in the catalyst layer, the gas diffusion layer may be subjected to water-repellent treatment, or a layer composed of carbon particles aggregate may be formed on the gas diffusion layer, using well-known means.

In an electrode for a fuel cell having an MEA composition of the present invention, thickness of the catalyst layer; the gas diffusion layer and the polymer electrolyte membrane is desirably as thinner as possible to improve diffusivity of fuel gas, however, too thin thickness does not provide sufficient electrode output. Therefore, the thickness may be determined, as appropriate, so that an MEA having desired characteristics is obtained.

The MEA described above is suitably used as a fuel cell. As kind of a fuel cell, in view of practical applicability and safety, a proton-exchange membrane fuel cell (PEFC) is preferably included.

Structure of a fuel cell is not especially limited, and includes structure having MEAs laminated by separators.

The separator is not especially limited, and those generally used such as carbon paper, and carbon cloth may be used. In addition, the separator is one having function for separating air and fuel gas, and may be formed with a gas flow channel for securing a channel thereof, and conventionally well-known technology can be used, as appropriate. Thickness or size of the separator is not especially limited, and may be determined, as appropriate, in consideration of output characteristics of the resultant fuel cell.

Furthermore, so that desired voltage of a fuel cell, and the like, can be obtained, a plurality of MEAs may be laminated in series to form a stack via separators. Shape of a fuel cell and the like are not especially limited, and may be determined, as appropriate, so that desired cell characteristics such as voltage can be obtained.

An electrode for a fuel cell of the present invention, because of having excellent power generation performance and durability, is capable of showing excellent characteristics over a long period. Therefore, an MEA and a fuel cell using such an electrode for a fuel cell can fulfill more excellent performance compared with conventional ones. Consequently, high efficiency of a fuel cell system can be attained and it is useful as a stationary power source, and power source for a mobile body such as a vehicle.

Examples:

The present invention is explained in more detail below based on Examples. In this connection, the present invention is by no means limited only to these Examples. In addition, in the Examples, "%" represents "% by mass" unless otherwise specified.

(Catalyst 1)

To 4.0 g of highly conductive carbon black (Ketjenblack™ EC produced from Ketjen Black International Co., Ltd.; BET surface area=804 $m^2$/g), 400 g of an aqueous solution of dinitrodiamine platinum (a Pt concentration of 1.0%) was added and stirred for 1 hour, and then 200 g of 50%-ethanol was mixed as a reducing agent, and stirred for 1 hour. After heating the solution to 85°C taking 30 minutes, it was further stirred and mixed at 85°C for 6 hours and cooled to room temperature taking 1 hour. The precipitate was filtered and the resultant solid content was dried at 85°C for 12 hours under reduced pressure, and crushed in a mortar to yield the catalyst 1 (an average Pt particle diameter of 2.3 nm; a Pt supporting concentration of 47%).

(Catalyst 2)

To 4.0 g of highly conductive carbon black (Vulcan XC-72, produced from Cabot Co., Ltd. ; BET surface area=280 $m^2$/g), 400 g of an aqueous solution of dinitrodiamine platinum (a Pt concentration of 1.0%) was added and stirred for 1 hour, and then 200 g of 50%-ethanol was mixed as a reducing agent, and stirred for 1 hour. After heating the solution to 85°C taking 30 minutes, it was further stirred and mixed at 85°C for 6 hours and cooled to room temperature taking 1 hour. The precipitate was filtered and the resultant solid content was dried at 85°C for 12 hours under reduced pressure, and crushed in a mortar to yield the catalyst 2 (an average Pt particle diameter of 2.6 nm; a Pt supporting concentration of 45%).

(Catalyst 3)

Highly conductive carbon black (Ketjenblack™ EC produced from Ketjen Black International Co., Ltd.; BET surface area=804 $m^2$/g) was heat treated at 2800°C for 10 hours to yield graphitized carbon black (BET surface area=125 $m^2$/g). To 4.0 g of this graphitized carbon black, 200 g of an aqueous solution of dinitrodiamine platinum (a Pt concentration of 1.0%) was added and stirred for 1 hour, and then 200 g of a 25% aquous solution of formic acid was mixed as a reducing agent, and stirred for 1 hour. The solution was heated to 50°C taking 30 minutes, and was further stirred and mixed at 50°C for 12 hours and then cooled to room temperature taking 1 hour. The precipitate was filtered and the resultant solid content was dried at 85°C for 12 hours under reduced pressure, and crushed in a mortar to yield the catalyst 3 (an average Pt particle diameter of 2.5 nm; a Pt supporting concentration of 45%).

(Catalyst 4)

Highly conductive carbon black (Vulcan XC-72, produced from Cabot Co., Ltd.; BET surface area=280 $m^2$/g) was heat treated at 2800°C for 10 hours to yield graphitized carbon black (BET surface area=90 $m^2$/g). To 4. 0 g of this graphitized carbon black, 200 g of an aqueous solution of dinitrodiamine platinum (a Pt concentration of 1.0%) was added and stirred for 1 hour, and then 200 g of a 25% aqueous solution of formic acid was mixed as a reducing agent, and stirred for 1 hour. The solution was heated to 40°C taking 30 minutes, and was stirred and mixed at 40°C for 16 hours and then cooled to room temperature taking 1 hour. The precipitate was filtered and the resultant solid content was dried at 85°C for 12 hours under reduced pressure, and crushed in a mortar to yield the catalyst 4 (an average Pt particle diameter of 2.7 nm; a Pt supporting concentration of 45%).

(Catalyst 5)

Highly conductive carbon black (Denka Black (furnace black) produced from Denki Kagaku Kogyo Kabushiki Kaisyha; BET surface area=120 $m^2$/g) was heat treated at 2800°C for 10 hours to yield graphitized carbon black (BET surface area=85 $m^2$/g). To 4.0 g of this graphitized carbon black, 200 g of an aqueous solution of dinitrodiamine platinum (a Pt concentration of 1.0%) was added and stirred for 1 hour. Then 200 g of a 25% aqueous solution of formic acid was mixed as a reducing agent, and stirred for 1 hour. The solution was heated to 60°C taking 30 minutes, and was stirred and mixed at 60°C for 12 hours and then cooled to room temperature taking 1 hour. The precipitate was filtered and the resultant solid content was dried at 85°C for 12 hours under reduced pressure, and crushed in a mortar to yield the catalyst 5 (an average Pt particle diameter of 2.8 nm; a Pt supporting concentration of 46%).

(Catalyst 6)

Highly conductive carbon black (acetylene black produced from Cabot Co., Ltd.; BET surface area=120 $m^2$/g) was heat treated at 2800°C for 10 hours to yield graphitized carbon black (BET surface area=88 $m^2$/g). To 4.0 g of this graphitized carbon black, 200 g of an aqueous solution of dinitrodiamine platinum (a Pt concentration of 1.0%) was added and stirred for 1 hour. Then 200 g of a 25% aqueous solution of formic acid was mixed as a reducing agent, and stirred for 1 hour. The solution was heated to 60°C taking 30 minutes, and was stirred and mixed at 60°C for 12 hours and then cooled to room temperature taking 1 hour. The precipitate was filtered and the resultant solid content was dried at 85°C for 12 hours under reduced pressure, and crushed in a mortar to yield the catalyst 6 (an average Pt particle diameter of 2.7 nm; a Pt supporting concentration of 48%).

Various characteristics (BET surface area of a highly water-repellent conductive carbon carrier, average particle diameter of a catalyst (Pt), catalyst (Pt) supporting amount) of the catalysts 1 to 6, which are production examples of carbon powder supporting a catalyst, are shown in Table 1 below.

Table 1

| Catalyst example | BET surface area ($m^2$/g) | Average Pt particle diameter (nm) | Pt supporting amount (wt%) |
|---|---|---|---|
| 1 | 804 | 2.3 | 47 |
| 2 | 280 | 2.6 | 45 |
| 3 | 125 | 2.5 | 45 |
| 4 | 90 | 2.7 | 45 |
| 5 | 85 | 2.8 | 46 |
| 6 | 88 | 2.7 | 48 |

1) BET surface area in Table 1 represents BET surface area of graphitized carbon black, which is highly water-repellent carbon.

2) Average particle diameter of Pt in Table 1 was measured by observation with a transmission electron microscope and X-ray diffraction.

3) Pt supporting amount in Table 1 is aimed at carbon powder (both of highly conductive carbon black and graphitized carbon black) supporting a catalyst, and measured by fluorescent X-ray diffraction.

Example 1

MEA was carried out according to the following procedure.

150 g of the catalyst 1, 50 g of the catalyst 3, Nafion in the same amount as carbon, purified water and isopropyl alcohol were added and sufficiently dispersed with a homogenizer, and further subjected to a defoaming operation to prepare the catalyst slurry (B1).

This slurry was printed in specified amount on one surface of carbon paper ("TGP-H" produced from Toray Corp.), which was the gas diffusion layer (GDL), by a screen printing method, and dried at 60°C for 24 hours.

Subsequently, 50 g of the catalyst 1, 150 g of the catalyst 3, 2000 g of a 5% Nafion solution ("DE-520" produced from DuPont Co., Ltd. : EW=1000) containing Nafion in the same amount as carbon, purified water and isopropyl alcohol were added and sufficiently dispersed with a homogenizer, and further subjected to a defoaming operation to prepare the catalyst slurry (A1). This slurry was printed in specified amount on the carbon paper, already coated with the catalyst slurry (B1), by a screen printing method, and dried at 60°C for 24 hours.

Subsequently, the surface coated with the catalyst layer was adhered to a polymer electrolyte membrane and subj ected to hot pressing at 120°C for 3 minutes under 0.2 MPa to prepare each MEA. On the other hand, as an anode, MEA was prepared by a similar method, using carbon supporting 47% Pt as an electrode catalyst.

These MEAs were designed to have, both an anode and a cathode, a Pt use amount of 0.5 mg per apparent electrode surface area of 1 cm$^2$, and an electrode surface area of 300 cm$^2$. In addition, as the electrolyte membrane, Nafion membrane ("NRE-211"produced from DuPont Co., Ltd.: membrane thickness=25 $\mu$m) was used.

Example 2

150 g of the catalyst 1, 50 g of the catalyst 4, Nafion in the same amount as carbon, purified water and isopropyl alcohol were added and sufficiently dispersed with a homogenizer, and further subjected to a defoaming operation to prepare the catalyst slurry (B2).

This slurry was printed in specified amount on one surface of carbon paper, which was the gas diffusion layer, by a screen printing method, and dried at 60°C for 24 hours.

Subsequently, 50 g of the catalyst 1, 150 g of the catalyst 4, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A2). This slurry was printed in specified amount on the carbon paper, already coated with the catalyst slurry (B2), by a screen printing method, and dried at 60°C for 24 hours.

A cathode catalyst layer was prepared similarly as in Example 1, on the subsequent steps.

Example 3

150 g of the catalyst 1, 50 g of the catalyst 5, Nafion in the same amount as carbon, purified water and isopropyl alcohol were added and sufficiently dispersed with a homogenizer, and further subjected to a defoaming operation to prepare the catalyst slurry (B3).

This slurry was printed in specified amount on one surface of carbon paper, which was the gas diffusion layer, by a screen printing method, and dried at 60°C for 24 hours.

Subsequently, 50 g of the catalyst 1, 150 g of the catalyst 5, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A3). This slurry was printed in specified amount on the carbon paper, already coated with the catalyst slurry (B3), by a screen printing method, and dried at 60°C for 24 hours.

A cathode catalyst layer was prepared similarly as in Example 1, on the subsequent steps.

Example 4

150 g of the catalyst 1, 50 g of the catalyst 6, Nafion in the same amount as carbon, purified water and isopropyl alcohol were added and sufficiently dispersed with a homogenizer, and further subjected to a defoaming operation to prepare the catalyst slurry (B4).

This slurry was printed in specified amount on one surface of carbon paper, which was the gas diffusion layer, by a screen printing method, and dried at 60°C for 24 hours.

Subsequently, 50 g of the catalyst 1, 150 g of the catalyst 6, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A4). This slurry was printed in specified amount on the carbon paper, already coated with the catalyst slurry (B4), by a screen printing method, and dried at 60°C for 24 hours.

A cathode catalyst layer was prepared similarly as in Example 1, on the subsequent steps.

Example 5

150 g of the catalyst 2, 50 g of the catalyst 3, Nafion in the same amount as carbon, purified water and isopropyl alcohol were added and sufficiently dispersed with a homogenizer, and further subjected to a defoaming operation to prepare the catalyst slurry (B5).

This slurry was printed in specified amount on one surface of carbon paper, which was the gas diffusion layer (GDL), by a screen printing method, and dried at 60°C for 24 hours.

Subsequently, 50 g of the catalyst 2, 150 g of the catalyst 3, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A5). This slurry was printed in specified amount on the carbon paper, already coated with the catalyst slurry (B5), by a screen printing method, and dried at 60°C for 24 hours.

A cathode catalyst layer was prepared similarly as in Example 1, on the subsequent steps.

Example 6

150 g of the catalyst 2, 50 g of the catalyst 4, Nafion in the same amount as carbon, purified water and isopropyl alcohol were added and sufficiently dispersed with a homogenizer, and further subjected to a defoaming operation to prepare the catalyst slurry (B6).

This slurry was printed in specified amount on one surface of carbon paper, which was the gas diffusion layer, by a screen printing method, and dried at 60°C for 24 hours.

Subsequently, 50 g of the catalyst 2, 150 g of the catalyst 4, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A6). This slurry was printed in specified amount on the carbon paper, already coated with the catalyst slurry (B6), by a screen printing method, and dried at 60°C for 24 hours.

A cathode catalyst layer was prepared similarly as in Example 1, on the subsequent steps.

Example 7

150 g of the catalyst 2, 50 g of the catalyst 5, Nafion in the same amount as carbon, purified water and isopropyl alcohol were added and sufficiently dispersed with a homogenizer, and further subjected to a defoaming operation to prepare the catalyst slurry (B7).

This slurry was printed in specified amount on one surface of carbon paper, which was the gas diffusion layer, by a screen printing method, and dried at 60°C for 24 hours.

Subsequently, 50 g of the catalyst 1, 150 g of the catalyst 5, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A7). This slurry was printed in specified amount on the carbon paper, already coated with the catalyst slurry (B7), by a screen printing method, and dried at 60°C for 24 hours.

A cathode catalyst layer was prepared similarly as in Example 1, on the subsequent steps.

Example 8

150 g of the catalyst 2, 50 g of the catalyst 6, Nafion in the same amount as carbon, purified water and isopropyl alcohol were added and sufficiently dispersed with a homogenizer, and further subjected to a defoaming operation to prepare the catalyst slurry (B8).

This slurry was printed in specified amount on one surface of carbon paper, which was the gas diffusion layer, by a screen printing method, and dried at 60°C for 24 hours.

Subsequently, 50 g of the catalyst 2, 150 g of the catalyst 6, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A8). This slurry was printed in specified amount on the carbon paper, already coated with the catalyst slurry (B8), by a screen printing method, and dried at 60°C for 24 hours.

A cathode catalyst layer was prepared similarly as in Example 1, on the subsequent steps.

Example 9

100 g of the catalyst 1, 100 g of the catalyst 3, Nafion in the same amount as carbon, purified water and isopropyl alcohol were added and sufficiently dispersed with a homogenizer, and further subjected to a defoaming operation to prepare the catalyst slurry (B9).

This slurry was printed in specified amount on one surface of carbon paper ("TGP-H" produced from Toray Corp.), which was the gas diffusion layer, by a screen printing method, and dried at 60°C for 24 hours.

Subsequently, 50 g of the catalyst 1, 150 g of the catalyst 4, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A9). This slurry was printed in specified amount on the carbon paper, already coated with the catalyst slurry (B9), by a screen printing method, and dried at 60°C for 24 hours.

A cathode catalyst layer was prepared similarly as in Example 1, on the subsequent steps.

Example 10

100 g of the catalyst 1, 100 g of the catalyst 3, Nafion in the same amount as carbon, purified water and isopropyl alcohol were added and sufficiently dispersed with a homogenizer, and further subjected to a defoaming operation to prepare the catalyst slurry (B10).

This slurry was printed in specified amount on one surface of carbon paper ("TGP-H" produced from Toray Corp.), which was the gas diffusion layer, by a screen printing method, and dried at 60°C for 24 hours.

Subsequently, 50 g of the catalyst 2, 150 g of the catalyst 5, 2000 g of a 5%-Nafion solution containing Nafion in the same amount as carbon, purified water and isopropyl alcohol were added and sufficiently dispersed with a homogenizer, and further subjected to a defoaming operation to prepare the catalyst slurry (A10). This slurry was printed in specified amount on the carbon paper, already coated with the catalyst slurry (B10), by a screen printing method, and dried at 60°C for 24 hours.

A cathode catalyst layer was prepared similarly as in Example 1, on the subsequent steps.

Example 11

The catalyst slurry (B1) was printed in specified amount on one surface of carbon paper ("TGP-H" produced from Toray Corp.), which was the gas diffusion layer, by a screen printing method, and dried at 60°C for 24 hours.

Then the catalyst slurry (A1) was printed in specified amount on one half surface of carbon paper already coated with the catalyst slurry (B1) at the gas entrance side, by a screen printing method, and dried at 60°C for 24 hours.

Then the catalyst slurry (A2) was printed in specified amount on one half surface of carbon paper already coated with the catalyst slurry (B1) at the gas exit side, by a screen printing method, and dried at 60°C for 24 hours.

Subsequently, the surface coated with the catalyst layer was adhered to a polymer electrolyte membrane and subjected to hot pressing at 120°C for 3 minutes under 0.2 MPa to prepare each MEA. On the other hand, as an anode, MEA was prepared by a similar method, using carbon supporting 47% Pt as an electrode catalyst.

A cathode catalyst layer was prepared similarly as in Example 1, on the subsequent steps.

Example 12

The catalyst slurry (B1) was printed in specified amount on one half surface of carbon paper ("TGP-H" produced from Toray Corp.), which was the gas diffusion layer, at the gas entrance side, by a screen printing method, and dried at 60°C for 24 hours.

Then the catalyst slurry (A1) was printed in specified amount on one half surface of carbon paper, which was the gas diffusion layer at the gas exit side, by a screen printing method, and dried at 60°C for 24 hours.

Then the catalyst slurry (A1) was printed in specified amount on one half surface of carbon paper already coated with the catalyst slurry (B1) at the gas entrance side, by a screen printing method, and dried at 60°C for 24 hours.

Then the catalyst slurry (A5) was printed in specified amount on one half surface of carbon paper already coated with the catalyst slurry (A1) at the gas exit side, by a screen printing method, and dried at 60°C for 24 hours.

Subsequently, the surface coated with the catalyst layer was adhered to a polymer electrolyte membrane and subjected to hot pressing at 120°C for 3 minutes under 0.2 MPa to prepare each MEA. On the other hand, as an anode, MEA was prepared by a similar method, using carbon supporting 47% Pt as an electrode catalyst.

A cathode catalyst layer was prepared similarly as in Example 1, on the subsequent steps.

Comparative Example 1

100 g of the catalyst 1, Nafion in the same amount as carbon, purified water and isopropyl alcohol were added and sufficiently dispersed with a homogenizer, and further subjected to a defoaming operation to prepare the catalyst slurry (B11).

This slurry was printed in specified amount on one surface of carbon paper, which was the gas diffusion layer, by a screen printing method, and dried at 60°C for 24 hours. Then the same catalyst slurry (B11) was similarly printed further in specified amount by a screen printing method, and dried at 60°C for 24 hours.

A cathode catalyst layer was prepared similarly as in Example 1, on the subsequent steps.

Comparative Example 2

100 g of the catalyst 3, Nafion in the same amount as carbon, purified water and isopropyl alcohol were added and sufficiently dispersed with a homogenizer, and further subjected to a defoaming operation to prepare the catalyst slurry (B12).

This slurry was printed in specified amount on one surface of carbon paper, which was the gas diffusion layer, by a screen printing method, and dried at 60°C for 24 hours. Then the same catalyst slurry (B12) was similarly printed further in specified amount by a screen printing method, and dried at 60°C for 24 hours.

A cathode catalyst layer was prepared similarly as in Example 1, on the subsequent steps.

Comparative Example 3

100 g of the catalyst 4, Nafion in the same amount as carbon, purified water and isopropyl alcohol were added and sufficiently dispersed with a homogenizer, and further subjected to a defoaming operation to prepare the catalyst slurry (B13).

This slurry was printed in specified amount on one surface of carbon paper, which was the gas diffusion layer, by a screen printing method, and dried at 60°C for 24 hours. Then the same catalyst slurry (B13) was similarly printed further in specified amount by a screen printing method, and dried at 60°C for 24 hours.

A cathode catalyst layer was prepared similarly as in Example 1, on the subsequent steps.

Comparative Example 4

100 g of the catalyst 5, Nafion in the same amount as carbon, purified water and isopropyl alcohol were added and sufficiently dispersed with a homogenizer, and further subjected to a defoaming operation to prepare the catalyst slurry (B14).

This slurry was printed in specified amount on one surface of carbon paper, which was the gas diffusion layer, by a screen printing method, and dried at 60°C for 24 hours. Then the same catalyst slurry (B14) was similarly printed further in specified amount by a screen printing method, and dried at 60°C for 24 hours.

A cathode catalyst layer was prepared similarly as in Example 1, on the subsequent steps.

Comparative Example 5

The catalyst slurry (A1) was printed in specified amount on one surface of carbon paper, which was the gas diffusion layer, by a screen printing method, and dried at 60°C for 24 hours.

Then, the catalyst slurry (B1) was similarly printed in specified amount on the carbon paper already coated with the catalyst slurry (A1), by a screen printing method, and dried at 60°C for 24 hours.

Subsequently, the surface coated with the catalyst layer was adhered to a polymer electrolyte membrane and subjected to hot pressing at 120°C for 3 minutes under 0.2 MPa to prepare each MEA. On the other hand, as an anode, MEA was prepared by a similar method, using carbon supporting 47% Pt as an electrode catalyst.

A cathode catalyst layer was prepared similarly as in Example 1, on the subsequent steps.

(Performance evaluation of electrode catalyst)

On each of the resultant electrode catalyst in Examples 1 to 12, and Comparative Examples 1 to 5, MEAs (Membrane-Electrode Assembly) were prepared to be subjected to performance measurement of a unit cell for a fuel cell.

Performance measurement of the resultant unit cell for a fuel cell is carried out as follows. In this connection, in the measurement, hydrogen was supplied to an anode side as fuel, and air was supplied to a cathode side. Supplying pressure of both gases was set to be atmospheric pressure; hydrogen and air were humidified to saturation at 80°C and 60°C, respectively; temperature of a fuel cell body was set to 80°C; utilization rate of hydrogen and air was set to 70% and 30%, respectively; and operation was continued for 30 minutes under a current density of 1.0 A/cm$^2$. When power generation was stopped, current density to take out was set to zero and then hydrogen in the anode was discharged by air purging. The exit side of the cathode was open at atmospheric pressure. At this time, temperature of the fuel cell body was not controlled and period of stop was set to 30 minutes. When operation was resumed after operation stop, gas was introduced again into the cell under the above conditions to start power generation. By repeating this start-stop cycle, the unit cell for a fuel cell was subjected to durability evaluation. Results are shown in Table 2 below.

Table 2

| | X ($\mu$m) | A (mg/cm$^2$) | Y ($\mu$m) | B (mg/cm$^2$) | A/X | B/Y | IPGP (V) | S-S times (time) |
|---|---|---|---|---|---|---|---|---|
| Exp 1 | 8 | 0.237 | 7 | 0.070 | 29.617 | 10.057 | 0.658 | 2450 |
| Exp 2 | 8 | 0.237 | 7 | 0.070 | 29.617 | 10.057 | 0.655 | 2930 |
| Exp 3 | 8 | 0.231 | 7 | 0.068 | 28.897 | 9.723 | 0.652 | 3500 |
| Exp 4 | 8 | 0.220 | 7 | 0.064 | 27.499 | 9.080 | 0.653 | 3830 |
| Exp 5 | 8 | 0.244 | 7 | 0.071 | 30.556 | 10.185 | 0.648 | 4030 |
| Exp 6 | 8 | 0.244 | 7 | 0.071 | 30.556 | 10.185 | 0.645 | 4545 |
| Exp 7 | 8 | 0.236 | 7 | 0.069 | 29.508 | 9.845 | 0.647 | 4840 |
| Exp 8 | 8 | 0.227 | 7 | 0.064 | 28.354 | 9.190 | 0.648 | 4790 |
| Exp 9 | 10 | 0.239 | 10 | 0.071 | 23.933 | 7.111 | 0.653 | 5060 |
| Exp 10 | 10 | 0.240 | 10 | 0.070 | 23.956 | 6.987 | 0.655 | 5450 |
| Exp 11 | 8 | USS: 0.237 DSS: 0.237 | 7 | USS: 0.070 DSS: 0.237 | 29.617 | 10.057 | | |
| Exp 12 | 8 | USS: 0.237 DSS: 0.237 | 7 | USS: 0.237 DSS: 0.244 | 30.086 | 19.837 | | |
| C. Exp 1 | 15 | 0.564 | - | - | 37.589 | - | 0.655 | 550 |
| C. Exp 2 | 15 | 0.611 | - | - | 40.741 | - | 0.634 | 1520 |
| C. Exp 3 | 15 | 0.611 | - | - | 40.741 | - | 0.625 | 1550 |
| C. Exp 4 | 15 | 0.587 | - | - | 39.130 | - | 0.623 | 1730 |
| C. Exp 5 | 7 | 0.070 | 8 | 0.237 | 10.057 | 29.617 | 0.658 | 1380 |

(Note)
Exp: Example, C. Exp: Comparative Example
IPGP: Initial power generation performance,
S-S times: Start-stop times
USS: Upstream side,
DSS: Downstream side

Fig. 3 is a graph showing variation of cell voltage, under a current density of 1.0 A/cm$^2$ for start-stop cycle times of each fuel cell of PEFC composed by using the electrode catalyst prepared in Example and Comparative Example. As is shown in this Fig., a fuel cell using a catalyst of the present invention (Example) is confirmed to show smaller decreasing speed of cell voltage for operation start-stop cycle times than a fuel cell using a conventional catalyst

(Comparative Example).

Examples described above are those for more specifically explaining the present invention, and the present invention should not be limited thereto.

As has been described above, a membrane-electrode assembly for a fuel cell of the present invention can promote removal of generated water in the catalyst layer of at least the cathode side, suppress corrosion of carbon and provide a membrane-electrode assembly for a fuel cell excellent in durability and catalytic performance. Therefore, in a fuel cell using the membrane-electrode assembly for a fuel cell, high power generation performance can be maintained from the initial stage of power generation start-up and over a long period.

Further, the present application is based on Japanese patent application No. 2004-184637 filed in Japan on June 23, 2004, which disclosed contents are herein incorporated, by reference, in its entirety.

**Claims**

1.  A membrane-electrode assembly for a fuel cell comprising:

    a catalyst layer containing carbon powder supporting a catalyst and
    a polymer electrolyte;
    a polymer electrolyte membrane; and
    a gas diffusion layer:

    wherein the amount of highly water-repellent carbon in said catalyst layer of at least an oxygen reducing electrode side varies from the side contacting with the polymer electrolyte membrane toward the gas diffusion layer side.

2.  The membrane-electrode assembly for a fuel cell according to claim 1, wherein content ratio of the highly water-repellent carbon in said catalyst layer satisfies the following equation (1):

$$[\text{Equation 1}]$$

$$(A/X) > (B/Y) \qquad (1)$$

    wherein the catalyst layer of said polymer electrolyte membrane side has thickness of X ($\mu$m) and contains A (g) per 1 cm$^2$ of the highly water-repellent carbon; and the catalyst layer of said gas diffusion layer side has thickness of Y ($\mu$m) and contains B (g) per 1 cm$^2$ of the highly water-repellent carbon.

3.  The membrane-electrode assembly for a fuel cell according to claim 1 or 2, wherein the highly water-repellent carbon in said catalyst layer is graphitized carbon having a BET surface area of below 150 m$^2$/g.

4.  The membrane-electrode assembly for a fuel cell of any one of claims 1 to 3, wherein highly hydrophilic carbon in said catalyst layer is carbon having a BET surface area of not lower than 150 m$^2$/g.

5.  The membrane-electrode assembly for a fuel cell according to any one of claims 1 to 4, wherein the amount of the highly water-repellent carbon in said catalyst layer continuously varies from the side contacting with the polymer electrolyte membrane toward the gas diffusion layer side.

6.  The membrane-electrode assembly for a fuel cell according to any one of claims 1 to 5, wherein the amount of the highly water-repellent carbon in said catalyst layer varies from a gas entrance side toward a gas exit side.

7.  The membrane-electrode assembly for a fuel cell according to any one of claims 1 to 6, wherein the amount of the highly water-repellent carbon in said catalyst layer continuously varies from the side contacting with the polymer electrolyte membrane toward the gas diffusion layer side, and also from the gas entrance side toward the gas exit side.

8.  The membrane-electrode assembly for a fuel cell according to any one of claims 1 to 7, wherein the highly water-repellent carbon in said catalyst layer supports at least one kind of a catalyst component selected from the group consisting of platinum, palladium, rhodium, ruthenium and iridium.

9. The membrane-electrode assembly for a fuel cell according to any one of claims 1 to 8, wherein the highly water-repellent carbon in said catalyst layer supports at least one kind of a noble metal component selected from the group consisting of platinum, palladium, rhodium, ruthenium and iridium, and further supports at least one kind of a base metal component selected from the group consisting of Co, Cr, Mn, Ni and Fe, and supporting amount of said noble metal / supporting amount of said base metal (molar ratio)=5/1 to 1/2.

# FIG. 1

# FIG. 2

AMOUNT OF HIGHLY WATER REPELLENT CARBON

EMBODIMENT CHANGING STEPWISE (2)

EMBODIMENT CHANGING
CONTINUOUSLY AND LINEARLY

EMBODIMENT CHANGING STEPWISE (1)

THE SIDE CONTACTING WITH
A POLYMER ELECTROLYTE MEMBRANE
OR THE GAS ENTRANCE SIDE

A GAS DIFFUSION LAYER SIDE
OR THE GAS EXIT SIDE

# FIG. 3

( a )

AMOUNT OF WATER
REPELLENT CARBON
B (g／cm²)

AMOUNT OF WATER
REPELLENT CARBON
A (g／cm²)

$A／X > B／Y$

( b )

AMOUNT OF WATER
REPELLENT CARBON
$B_1$ (g／cm²)

AMOUNT OF WATER
REPELLENT CARBON
$B_2$ (g／cm²)

AMOUNT OF WATER
REPELLENT CARBON
$A_1$ (g／cm²)

AMOUNT OF WATER
REPELLENT CARBON
$A_2$ (g／cm²)

$A_1／X_1 > B_1／Y_1,$
$A_2／X_2 > B_2／Y_2$
PREFERABLY
$A_1／X_1 > A_2／X_2 \geqq B_1／Y_1 > B_2／Y_2$

FIG. 4

## INTERNATIONAL SEARCH REPORT

| International application No. |
|---|
| PCT/JP2005/009396 |

A.  CLASSIFICATION OF SUBJECT MATTER
    Int.Cl⁷  H01M4/96, 4/88, 4/90, 4/92, 8/02, 8/10

According to International Patent Classification (IPC) or to both national classification and IPC

B.   FIELDS SEARCHED

Minimum documentation searched (classification system followed by classification symbols)
    Int.Cl⁷  H01M4/86-4/96, 8/02, 8/10

Documentation searched other than minimum documentation to the extent that such documents are included in the fields searched
    Jitsuyo Shinan Koho          1922-1996   Jitsuyo Shinan Toroku Koho   1996-2005
    Kokai Jitsuyo Shinan Koho    1971-2005   Toroku Jitsuyo Shinan Koho   1994-2005

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 5-251086 A  (Hitachi, Ltd.),<br>28 September, 1993 (28.09.93),<br>Claims 1, 7; Par. No. [0034]; Figs. 1 to 5<br>& EP 560295 A1          & US 5500292 A | 1,5<br>3,4,6,7<br>2,8,9 |
| X<br>Y<br>A | JP 10-189004 A  (Tokyo Gas Co., Ltd.),<br>21 July, 1998 (21.07.98),<br>Claims 1, 3; Par. Nos. [0015], [0029] to [0033]<br>(Family: none) | 1,5,8<br>3,4,6,7,9<br>2 |
| Y | JP 59-181463 A  (Toshiba Corp.),<br>15 October, 1984 (15.10.84),<br>Page 2, upper right column, lines 11 to 18;<br>page 3, lower right column, line 12 to page 4,<br>upper left column, line 3<br>(Family: none) | 3,4 |

| ☒  Further documents are listed in the continuation of Box C. | ☐  See patent family annex. |
|---|---|

\*      Special categories of cited documents:
"A"    document defining the general state of the art which is not considered
       to be of particular relevance
"E"    earlier application or patent but published on or after the international
       filing date
"L"    document which may throw doubts on priority claim(s) or which is
       cited to establish the publication date of another citation or other
       special reason (as specified)
"O"    document referring to an oral disclosure, use, exhibition or other means
"P"    document published prior to the international filing date but later than
       the priority date claimed

"T"    later document published after the international filing date or priority
       date and not in conflict with the application but cited to understand
       the principle or theory underlying the invention
"X"    document of particular relevance; the claimed invention cannot be
       considered novel or cannot be considered to involve an inventive
       step when the document is taken alone
"Y"    document of particular relevance; the claimed invention cannot be
       considered to involve an inventive step when the document is
       combined with one or more other such documents, such combination
       being obvious to a person skilled in the art
"&"    document member of the same patent family

| Date of the actual completion of the international search<br>    26 August, 2005 (26.08.05) | Date of mailing of the international search report<br>    13 September, 2005 (13.09.05) |
|---|---|
| Name and mailing address of the ISA/<br>    Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2005/009396

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2002-110191 A  (Toyota Central Research And Development Laboratories, Inc.), 12 April, 2002 (12.04.02), Claim 3; Par. Nos. [0032], [0074] (Family: none) | 6,7 |
| Y | JP 6-7679 A  (Tanaka Kikinzoku Kogyo Kabushiki Kaisha), 18 January, 1994 (18.01.94), Full text (Family: none) | 9 |
| A | JP 2003-109604 A  (Matsushita Electric Industrial Co., Ltd.), 11 April, 2003 (11.04.03), Full text (Family: none) | 1-9 |

Form PCT/ISA/210 (continuation of second sheet) (January 2004)

## INTERNATIONAL SEARCH REPORT

| International application No. |
|---|
| PCT/JP2005/009396 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
    Since the invention of claim 1 is not novel, there is no technical relationship among the invention of claims 1-5 and 8, the invention of claims 6 and 7 and the invention of claim 9 involving a technical feature which makes a contribution over the prior art.
    Consequently, there is no technical relationship among these inventions involving one or more of the same or corresponding special technical features, and thus these inventions are not considered so linked as to form a single general inventive concept.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest.

☐ No protest accompanied the payment of additional search fees.

Form PCT/ISA/210 (continuation of first sheet (2)) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002273224 A
- JP 2003109604 A
- JP 7220734 A
- JP 7078617 A
- JP 2004184637 A

**Non-patent literature cited in the description**

- **MICHIO INAGAKI.** *Carbon,* 1963, vol. 36, 25-34
- **INAGAKI MICHIO.** *Carbon,* 1963, vol. 36, 25-34